# EUROPÄISCHE PATENTSCHRIFT

(11) **EP 3 084 156 B1**
(45) Veröffentlichungstag und Bekanntmachung des Hinweises auf die Patenterteilung: **31.01.2018**
(21) Anmeldenummer: 14820741.8
(22) Anmeldetag: 18.11.2014
(51) Int. Cl.: F01M 13/00

(54) **VERFAHREN UND STEUEREINRICHTUNG ZUM ÜBERWACHEN EINES KURBELGEHÄUSEDRUCKS**
DEVICE AND METHOD FOR MONITORING THE CRANKCASE PRESSURE
DISPOSITIF ET PROCÉDÉ DE SURVEILLANCE DE LA PRESSION DU CARTER MOTEUR

(30) Priorität: 19.12.2013 DE 102013021295
(43) Veröffentlichungstag der Anmeldung: 26.10.2016
(73) Patentinhaber: MTU FRIEDRICHSHAFEN GMBH, 88045 Friedrichshafen (DE)
(72) Erfinder: HÖNL, Michael, 88273 Fronreute (DE); REHM, Christian, 88046 Friedrichshafen (DE); TRAUTZ, Kai-Michael, 86163 Augsburg (DE); BALDAUF, Johannes, 88239 Wangen (DE)
(86) Internationale Anmeldenummer: PCT/EP2014/003075
(87) Internationale Veröffentlichungsnummer: WO 2015/090495

(56) Entgegenhaltungen:
- EP-A2- 0 241 030
- WO-A1-2009/116897
- JP-A- H0 419 312
- JP-A- 2009 085 177
- US-A- 4 763 627
- US-A- 5 792 949
- US-A1- 2004 267 432
- US-A1- 2010 050 754

## Beschreibung

Die vorliegende Erfindung betrifft ein Verfahren und eine Steuereinrichtung zum Überwachen eines Kurbelgehäusedrucks in einem Kurbelgehäuse einer Verbrennungskraftmaschine. Insbesondere bei einem Defekt kann im Betrieb einer Verbrennungskraftmaschine der Druck im Kurbelgehäuse plötzlich und schnell ansteigen. Dies kann unter Umständen zur Zerstörung der Verbrennungskraftmaschine führen. Es ist daher allgemein bekannt, in einem Kurbelgehäuse der Verbrennungskraftmaschine den Kurbelgehäusedruck zu überwachen. Dies erfolgt üblicherweise mittels eines Sensors, mit dem der aktuell im Kurbelgehäuse vorhandene Druck bestimmt wird. Der aktuelle Kurbelgehäusedruck wird in einer Steuerung der Verbrennungskraftmaschine mit einem vorgegebenen Schwellenwert verglichen. Überschreitet der aktuelle Kurbelgehäusedruck den Schwellenwert, so liegt ein Fehler vor und die Verbrennungskraftmaschine wird abgestellt. Der Schwellenwert wird einerseits so festgelegt, dass große Beschädigungen der Verbrennungskraftmaschine verhindert werden. Auf der anderen Seite soll gewährleistet werden, dass ein unnötiges Abschalten der Verbrennungskraftmaschine bei niedrig festgelegtem Schwellenwert vermieden wird. Beim Einstellen der Verbrennungskraftmaschine muss somit ein Kompromiss zwischen diesen beiden Anforderungen gefunden werden. Ein solches Verfahren wird in der WO 2009/116897 offenbart. Es ist die Aufgabe der vorliegenden Erfindung, ein zuverlässiges Überwachen eines Kurbelgehäusedrucks in einem Kurbelgehäuse einer Verbrennungskraftmaschine zu gewährleisten und dadurch eine Beschädigung der Verbrennungskraftmaschine zu vermeiden.
Diese Aufgabe wird gemäß der technischen Lehre des Anspruchs 1 oder des Anspruchs 10 gelöst. Vorteilhafte Ausgestaltungen der Erfindung ergeben sich aus den abhängigen Ansprüchen.
Bei dem erfindungsgemäßen Verfahren zum Überwachen eines Kurbelgehäusedrucks in einem Kurbelgehäuse einer Verbrennungskraftmaschine werden für mehrere Betriebspunkte der Verbrennungskraftmaschine Drucksollwerte für den Kurbelgehäusedruck festgelegt. Ferner wird wenigstens einer der festgelegten Drucksollwerte während des Betriebs der Verbrennungskraftmaschine verändert. Die erfindungsgemäße Steuereinrichtung zum Überwachen eines Kurbelgehäusedrucks in einem Kurbelgehäuse einer Verbrennungskraftmaschine ist so ausgestaltet, dass sie für mehrere Betriebspunkte der Verbrennungskraftmaschine Drucksollwerte für den Kurbelgehäusedruck festlegt. Sie ist des Weiteren so ausgestaltet, dass sie wenigstens einen der festgelegten Drucksollwerte während des Betriebs der Verbrennungskraftmaschine verändert.

Aufgrund der vorliegenden Erfindung kann vorteilhafterweise wenigstens einer der Drucksollwerte angepasst und dadurch die Überwachung des Kurbelgehäusedrucks, insbesondere regelmäßig, verbessert werden. Während der Laufzeit der Verbrennungskraftmaschine ändern sich, beispielsweise durch Alterung, das Verhalten und die Eigenschaften von Komponenten der Verbrennungskraftmaschine. Beispielsweise kann es zu einem Verschleißen von Kolbenringen oder zu einem Verschmutzen von Filtern kommen, die hinter einer Kurbelgehäuseentlüftung vorgesehen sind. Dadurch kann sich auch der im Kurbelgehäuse unter normalen Bedingungen auftretende Kurbelgehäusedruck verändern. Erfindungsgemäß wird daher wenigstens einer der Drucksollwerte für den Kurbelgehäusedruck verändert. Dadurch kann der Drucksollwert in besonders vorteilhafter Weise an veränderte Bedingungen und verändertes Verhalten, insbesondere der Verbrennungskraftmaschine oder ihrer Komponenten, angepasst werden. Aufgrund der Erfindung ist es vorteilhafterweise möglich, den Druck im Kurbelgehäuse auf schleichende Veränderungen, insbesondere einen schleichenden Anstieg, zu überwachen und frühzeitig mit geeigneten Maßnahmen darauf zu reagieren. Eine Grenze oder ein Schwellenwert für den aktuellen Kurbelgehäusedruck kann vorteilhafterweise so eng an den Drucksollwert gelegt werden, dass ein unnötiges Abschalten der Verbrennungskraftmaschine vermieden wird und gleichzeitig ein guter Schutz vor großen Beschädigungen gewährleistet ist. Das Verändern des wenigstens einen Drucksollwerts erfolgt vorteilhafterweise nach einem vorgegebenen Kriterium. Besonders vorteilhaft ist die Verbrennungskraftmaschine ein Dieselmotor. Das erfindungsgemäße Überwachen des Kurbelgehäusedrucks und das Verändern des wenigstens einen Drucksollwerts erfolgt vorzugsweise automatisiert, insbesondere kontinuierlich, zu vorgegebenen Zeitpunkten oder in vorgegebenen zeitlichen Abständen. Der Begriff Drucksollwert bedeutet hier vor allem einen für den jeweiligen Betriebspunkt der Verbrennungskraftmaschine geforderten oder gewünschten Wert für den Kurbelgehäusedruck.

In einer vorteilhaften Ausführungsvariante wird der veränderte, wenigstens eine festgelegte Drucksollwert als neuer Drucksollwert für den Kurbelgehäusedruck für einen der Betriebspunkte der Verbrennungskraftmaschine festgelegt. Die veränderten Bedingungen und das veränderte Verhalten der Verbrennungskraftmaschine werden somit vorteilhafterweise für das Überwachen des Kurbelgehäusedrucks gelernt.

In einer weiteren vorteilhaften Ausgestaltung der Erfindung wird der wenigstens eine festgelegte Drucksollwert in Abhängigkeit von einer Druckinformation über einen aktuell vorhandenen Kurbelgehäusedruck verändert. Auf diese Weise kann das Verändern des wenigstens einen Drucksollwerts besonders gut an das veränderte Verhalten der Verbrennungskraftmaschine angepasst werden. Die Auswahl des wenigstens einen Drucksollwerts aus den mehreren Drucksollwerten erfolgt insbesondere in Abhängigkeit von demjenigen Betriebspunkt, in dem sich die Verbrennungskraftmaschine beim Bestimmen der Druckinformation befindet. Die Druckinformation ist besonders vorteilhaft in einem Signal enthalten. In einer solchen Form kann die Druckinformation besonders einfach verarbeitet und ausgewertet werden.

In einer weiteren vorteilhaften Ausgestaltung wird die Druckinformation mittels eines Filters gefiltert und der wenigstens eine der festgelegten Drucksollwerte in Abhängigkeit von der gefilterten Druckinformation verändert. Auf diese Weise kann die Druckinformation für ihre weitere Verarbeitung und Auswertung in geeigneter Weise aufbereitet werden. Mittels der gefilterten Druckinformation kann eine noch genauere Überwachung des Kurbelgehäusedrucks erfolgen.

In einer besonders bevorzugten Ausgestaltung der Erfindung bewirkt der Filter, mit dem die Druckinformation gefiltert wird, eine zeitliche Mittelung, die durch eine Filter-Zeitkonstante als Filterparameter charakterisiert ist. Durch einen solchen Filter kann vorteilhafterweise eine Mittelung oder Dämpfung der Druckinformation, insbesondere bei einem Einschwingvorgang, erfolgen. Dadurch kann vorteilhafterweise eine besonders genaue Überwachung des Kurbelgehäusedrucks gewährleistet werden. Der Filter kann insbesondere ein Filter mit einer Tiefpasscharakteristik sein. Beispielsweise weist der Filter ein sogenanntes PT₁-Glied auf. Die Filter-Zeitkonstante liegt besonders vorteilhaft zwischen 0,5 Minuten und 5 Minuten, insbesondere bei 1 Minute.

Gemäß einer Weiterbildung der Erfindung wird der wenigstens eine der festgelegten Drucksollwerte in Abhängigkeit von einem Erkennen eines stationären Betriebs der Verbrennungskraftmaschine verändert, bei dem die Verbrennungskraftmaschine über wenigstens eine vorgegebene Zeitdauer in den Grenzen eines Betriebsbereichs der Verbrennungskraftmaschine betrieben wird. Dadurch kann vorteilhafterweise gewährleistet werden, dass Schwankungen des Kurbelgehäusedrucks aufgrund von üblichen geringen Veränderungen des Betriebspunkts der Verbrennungskraftmaschine nicht berücksichtigt werden. Beim Erkennen des stationären Betriebs der Verbrennungskraftmaschine wird einfachheitshalber ermittelt, für welche Zeitdauer sich die Verbrennungskraftmaschine in einem Drehzahl- und/oder Drehmomentbereich im Betrieb befindet. Der Drehzahl- und/oder Drehmomentbereich ist vorteilhafterweise ein Bereich eines spezifischen Kennlinienfeldes der Verbrennungskraftmaschine. Bei einem Eintritt der Verbrennungskraftmaschine in den Drehzahl- und/oder Drehmomentbereich wird einfachheitshalber ein Erfassen der Zeit gestartet. Verbleibt die Verbrennungskraftmaschine mindestens für die vorgegebene Zeitdauer in diesem Drehzahl- und/oder Drehmomentbereich so wird der stationäre Betrieb erkannt. Das erfindungsgemäße Überwachen des Kurbelgehäusedrucks kann dann vorteilhafterweise durchgeführt werden. Die vorgegebene Zeitdauer ist vorteilhafterweise einstell- und veränderbar. Sie liegt besonders vorteilhaft zwischen 3 Minuten und 10 Minuten, insbesondere bei 5 Minuten.

Besonders vorteilhaft ist an einer Grenze des Betriebsbereichs ein Hysteresebereich zum Erkennen des stationären Betriebs der Verbrennungskraftmaschine vorhanden. Dadurch kann vorteilhafterweise ein nicht erwünschtes Hin- und Herspringen zwischen benachbarten Betriebsbereichen der Verbrennungskraftmaschine vermieden werden. Die Grenze des Betriebsbereichs ist insbesondere eine obere Grenze des Betriebsbereichs. Der Hysteresebereich ist insbesondere ein Teilbereich eines Kennlinienfelds der Verbrennungskraftmaschine, der angrenzend an einen ersten Bereich des Kennlinienfelds in einem dem ersten Bereich benachbarten zweiten Bereich des Kennlinienfelds liegt. Verlässt die Verbrennungskraftmaschine beispielsweise während ihres Betriebs den ersten Bereich und kommt in den Hysteresebereich, so wird erst dann eine neue Zeiterfassung zum Erkennen des stationären Betriebs gestartet, wenn die Verbrennungskraftmaschine den Hysteresebereich in Richtung des zweiten Bereichs verlässt. Bei einem erneuten Eindringen in den Hysteresebereich wird die Erfassung des stationären Betriebs allerdings nicht erneut gestartet, sondern erst dann, wenn der Hysteresebereich in Richtung des ersten Bereichs verlassen wird.

Bevorzugt ist die Filter-Zeitkonstante kürzer, als die vorgegebene Zeitdauer zum Erkennen des stationären Betriebs der Verbrennungskraftmaschine. Dadurch kann vorteilhafterweise gewährleistet werden, dass beim Bestimmen der gefilterten Druckinformation ein eingeschwungener Zustand der gefilterten Druckinformation bereits vorliegt, bevor der stationäre Betrieb der Verbrennungskraftmaschine erkannt und das Überwachen des Kurbelgehäusedrucks begonnen wird. Besonders bevorzugt wird ein Fehler beim Betreiben der Verbrennungskraftmaschine in Abhängigkeit von einer Druckinformation über einen aktuellen Kurbelgehäusedruck und der Summe aus einem vorgegebenen Offset-Wert und dem Drucksollwert für den Kurbelgehäusedruck, der einem vorgegebenen Betriebspunkt eines Betriebsbereichs zugeordnet ist, in dem die Verbrennungskraftmaschine betrieben wird, festgestellt. Dadurch kann das Vorliegen eines Fehlers zuverlässig festgestellt und geeignete Maßnahmen ergriffen werden. Der vorgegebene Betriebspunkt des Betriebsbereichs ist vorteilhafterweise ein Mittelpunkt des Betriebsbereichs, insbesondere in einem Kennlinienfeld der Verbrennungskraftmaschine. Besonders vorteilhaft ist es möglich, zwei unterschiedliche Offset-Werte einzusetzen. Beispielsweise wird bei Verwendung eines ersten Offset-Werts der festgestellte Fehler angezeigt, insbesondere optisch oder akustisch. Bei Verwendung eines zweiten Offset-Werts, der größer ist als der erste Offset-Wert, wird dann die im Betrieb befindliche Verbrennungskraftmaschine abgestellt, um größere Beschädigungen zu vermeiden. Besonders vorteilhaft wird die gefilterte Druckinformation zum Feststellen des Fehlers beim Betreiben der Verbrennungskraftmaschine eingesetzt. Dadurch kann mit noch größerer Zuverlässigkeit der Fehler festgestellt werden.

Gemäß einer Ausführungsform der Erfindung wird eine Abweichung des wenigstens einen der festgelegten Drucksollwerte von einer Druckinformation über den aktuellen Kurbelgehäusedruck bestimmt. Ferner wird der wenigstens eine der festgelegten Drucksollwerte in Abhängigkeit von einer Multiplikation dieser Abweichung mit einem Faktor verändert, wobei der Faktor kleiner als eins und größer als null ist. Dadurch kann ein Anpassen des wenigstens einen der festgelegten Drucksollwerte vorteilhafterweise besonders einfach und zuverlässig erfolgen. Mit dem Faktor kann besonders einfach eingestellt werden, wie schnell das Verändern des wenigstens einen der festgelegten Drucksollwerte oder das Anpassen an eine Veränderung des aktuell festgestellten Kurbelgehäusedrucks erfolgen soll. Besonders vorteilhaft ist der Faktor einstell- und veränderbar. Vorteilhafterweise wird die gefilterte Druckinformation zum Bestimmen der Abweichung verwendet. Durch ein besonders geeignetes Festlegen des Faktors kann vermieden werden, dass ein fehlerhafter, sich schnell ändernder Kurbelgehäusedruck in erheblichem Maße zum Verändern des wenigstens einen Drucksollwerts beiträgt. Schnelle und starke Veränderungen des Kurbelgehäusedrucks werden somit vorteilhafterweise nur sehr eingeschränkt beim Verändern des wenigstens einen Drucksollwerts berücksichtigt. Eine langsame Veränderung, insbesondere Alterung, der Verbrennungskraftmaschine kann jedoch sicher und zuverlässig erfasst und berücksichtigt werden. Der Faktor liegt besonders vorteilhaft zwischen 0,05% und 0,5%, insbesondere bei 0,2%.

In einer vorteilhaften Ausgestaltung der Erfindung wird der veränderte, wenigstens eine festgelegte Drucksollwert als neuer Drucksollwert für den Kurbelgehäusedruck für einen der Betriebspunkte der Verbrennungskraftmaschine festgelegt. Dadurch kann ein besonders genaues Überwachen des Kurbelgehäusedrucks durch ein, insbesondere kontinuierliches, Lernen neuer Drucksollwerte für den jeweiligen Betriebspunkt gewährleistet werden.

Weitere vorteilhafte Ausführungsformen und Vorteile der Erfindung ergeben sich aus der folgenden Beschreibung von Ausführungsbeispielen, wobei Bezug auf die beigefügten Zeichnungen genommen wird. Es zeigen:
- Fig. 1: eine schematische Darstellung eines Beispiels einer Verbrennungskraftmaschine mit einer erfindungsgemäßen Steuereinrichtung,
- Fig. 2: eine schematische Darstellung eines Beispiels eines Kennlinienfelds der Verbrennungskraftmaschine,
- Fig. 3: eine schematische Darstellung eines Blockdiagramms eines Ausführungsbeispiels der erfindungsgemäßen Steuereinrichtung und
- Fig. 4: eine schematische Darstellung eines Beispiels eines zeitlichen Veränderungsverlaufs eines Drucksollwerts und eines aktuellen Kurbelgehäusedrucks für einen Betriebspunkt eines Bereichs des Kennlinienfelds nach Fig. 2.

Im Folgenden werden, sofern nicht anders angegeben, für gleiche oder gleichwirkende Elemente gleiche Bezugszeichen verwendet.

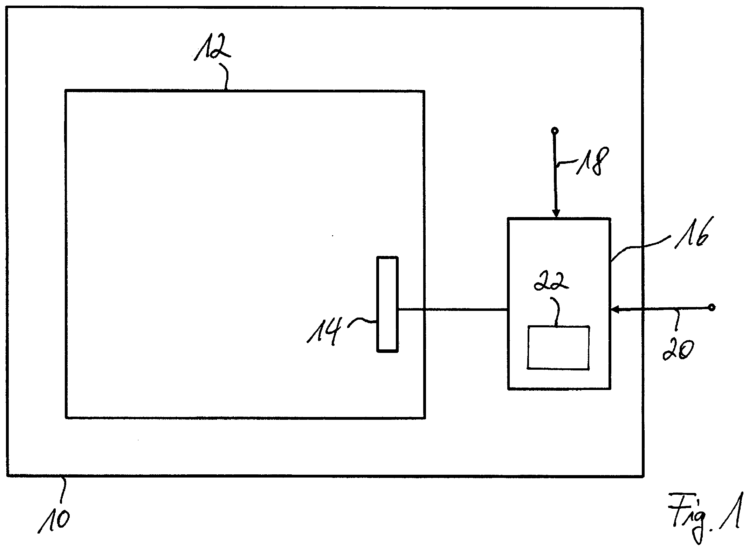

**Fig. 1** zeigt eine Verbrennungskraftmaschine, die im vorliegenden Ausführungsbeispiel ein Dieselmotor 10 ist. Der Dieselmotor 10 weist ein Kurbelgehäuse 12 auf, in dem ein Sensor 14 zum Messen eines Kurbelgehäusedrucks in dem Kurbelgehäuse 12 angeordnet ist. Der Sensor 14 ist über ein Kabel mit einer erfindungsgemäßen Steuereinrichtung 16 verbunden. Die Steuereinrichtung 16 steuert den Dieselmotor 10. Dazu erhält sie eine Vielzahl von Eingangssignalen von verschiedenen Komponenten des Dieselmotors 10, beispielsweise von verschiedenen Sensoren, und gibt eine Vielzahl von Ausgangssignalen aus, beispielsweise an verschiedene Aktoren des Dieselmotors 10. In der Fig. 1 ist stellvertretend für die Vielzahl von Eingangssignalen, die von Komponenten des Dieselmotors 10 selbst stammen, ein internes Eingangssignal 18 dargestellt. Die Steuereinrichtung 16 erhält ferner eine Vielzahl von Eingangssignalen von außerhalb des Dieselmotors 10. Stellvertretend für diese Vielzahl von externen Eingangssignalen ist in der Fig. 1 ein externes Eingangssignal 20 dargestellt. Die Steuereinrichtung 16 weist ferner einen Speicher 22 auf, in dem ein Kennlinienfeld des Dieselmotors 10 abgespeichert ist.

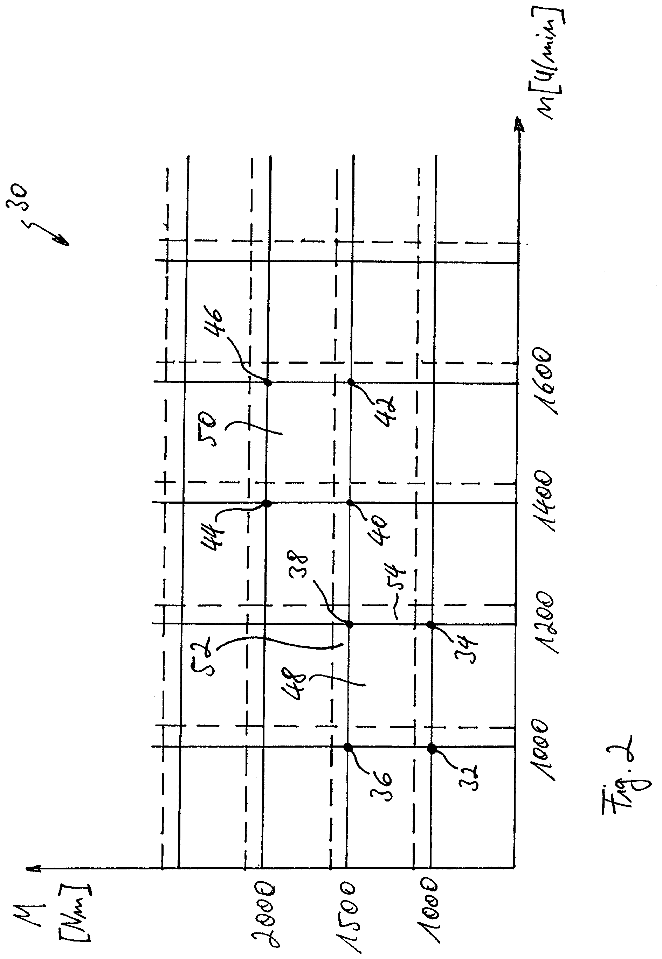

**Fig. 2** zeigt eine schematische Darstellung eines Beispiels eines Kennlinienfelds 30 des Dieselmotors 10. In dem Kennlinienfeld 30 ist ein von dem Dieselmotor 10 erzeugtes Drehmoment M über einer Drehzahl n des Dieselmotors 10 aufgetragen. In dem Kennlinienfeld 30 sind mehrere Stützstellen verdeutlicht, die für bestimmte Betriebspunkte des Dieselmotors 10 stehen. Die Stützstellen befinden sich an den Schnittpunkten der horizontalen und der vertikalen durchgezogenen Linien, die in der Fig. 2 in das Kennlinienfeld 30 eingezeichnet sind. Die horizontalen Linien kennzeichnen Drehmomente und die vertikalen Linien Drehzahlen des Dieselmotors 10. Stellvertretend für die Vielzahl von Stützstellen sind in dem Kennlinienfeld 30 Stützstellen 32, 34, 36, 38 sowie 40, 42, 44 und 46 verdeutlicht und mit Bezugszeichen versehen. Die Stützstelle 32 liegt bei einem Betriebspunkt, in dem der Dieselmotor 10 ein Drehmoment von 1000 Nm bei einer Drehzahl von 1000 U/min erbringt. Die Stützstelle 34 liegt bei einem Drehmoment von 1000 Nm und einer Drehzahl von 1200 U/min, die Stützstelle 36 bei 1500 Nm und 1000 U/min sowie die Stützstelle 38 bei 1500 Nm und 1200 U/min. Die Stützstelle 40 liegt bei 1500 Nm und 1400 U/min, die Stützstelle 42 bei 1500 Nm und 1600 U/min, die Stützstelle 44 bei 2000 Nm und 1400 U/min sowie die Stützstelle 46 bei 2000 Nm und 1600 U/min. Das Kennlinienfeld 30 weist eine Vielzahl von Kennlinienbereichen auf, deren Grenzen von den als Stützstellen bestimmten Betriebspunkten festgelegt werden. Die Kennlinienbereiche entsprechen letztlich Betriebsbereichen, in denen der Dieselmotor 10 betrieben werden kann. Im vorliegenden Ausführungsbeispiel enthält das Kennlinienfeld 30 rechteckige Kennlinienbereiche, deren Eckpunkte die Stützstellen sind. Stellvertretend für die verschiedenen Kennlinienbereiche des Kennlinienfelds 30 sind in der Fig. 2 ein Kennlinienbereich 48 und ein Kennlinienbereich 50 dargestellt. Die Grenzen des Kennlinienbereichs 48 werden durch die Stützstellen 32-38 und die Grenzen des Kennlinienbereichs 50 durch die Stützstellen 40-46 bestimmt.

In dem Kennlinienfeld 30 sind für die verschiedenen Stützstellen, die Betriebspunkten des Dieselmotors 10 entsprechen, Drucksollwerte für den Kurbelgehäusedruck enthalten. Im vorliegenden Ausführungsbeispiel nach Fig. 2 ist der Stützstelle 32 ein Drucksollwert p1 von beispielsweise 10 mbar, der Stützstelle 34 ein Drucksollwert p2 von beispielsweise 11 mbar, der Stützstelle 36 ein Drucksollwert p3 von beispielsweise 10 mbar und der Stützstelle 38 ein Drucksollwert p4 von beispielsweise 12 mbar zugeordnet. Diese Drucksollwerte werden für ihr erstmaliges Festlegen beispielsweise über ein experimentelles Betreiben des Dieselmotors 10 in den verschiedenen Betriebspunkten auf einem Prüfstand ermittelt. Während des Betriebs des Dieselmotors 10 können die Drucksollwerte erfindungsgemäß verändert und angepasst werden. Veränderte Drucksollwerte werden anschließend als Drucksollwerte dem zugehörigen Betriebspunkt, d. h. der zugehörigen Stützstelle, des Kennlinienfelds 30 zugewiesen. Der veränderte Drucksollwert ersetzt damit den entsprechenden zuvor festgelegten Drucksollwert des Kennlinienfelds 30. Auf diese Weise lernt das Kennlinienfeld, und damit die Steuereinrichtung 16, kontinuierlich oder regelmäßig veränderte Drucksollwerte. Das Lernen erfolgt vorteilhafterweise nach einem vorgegebenen Kriterium. Im vorliegenden Ausführungsbeispiel erfolgt das Lernen in Abhängigkeit von einem mittels des Sensors 14 bestimmten aktuellen Kurbelgehäusedruck im Kurbelgehäuse 12.

Die einzelnen Kennlinienbereiche des Kennlinienfelds 30 enthalten ferner angrenzend an ihre oberen Drehmomenten- und Drehzahl-Grenzen Hysteresebereiche, die durch gestrichelte Linien verdeutlicht sind. Ein solcher, einem der Kennlinienbereiche zugeordneter Hysteresebereich befindet sich somit zwischen einer oberen Grenze des Kennlinienbereichs, die durch eine durchgezogene Linie dargestellt ist, und der, in Richtung zunehmender Drehmoment- oder Drehzahl-Werte betrachtet, nächsten gestrichelten Linie. In der Fig. 2 ist stellvertretend für die Vielzahl von Hysteresebereichen ein Hysteresebereich 52 dargestellt, der dem Kennlinienbereich 48 zugeordnet ist und sich an dessen obere Drehmoment-Grenze anschließt. Es ist ferner in der Fig. 2 stellvertretend ein Hysteresebereich 54 dargestellt, der ebenfalls dem Kennlinienbereich 48 zugeordnet ist und sich an dessen obere Drehzahl-Grenze anschließt. Entsprechendes gilt für den Kennlinienbereich 50 und die anderen Kennlinienbereiche des Kennlinienfelds 30.

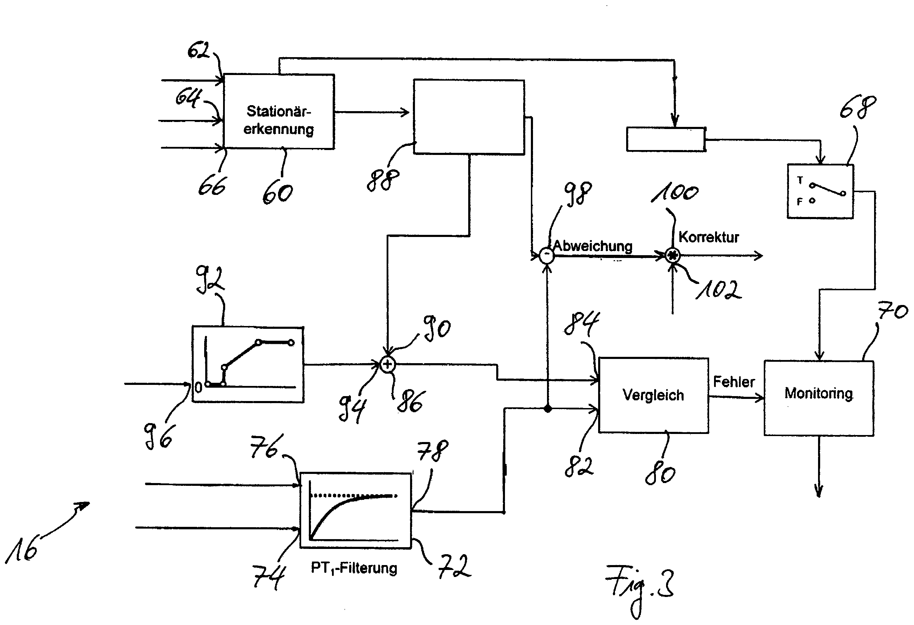

**Fig. 3** zeigt eine schematische Darstellung eines Blockdiagramms eines Ausführungsbeispiels der erfindungsgemäßen Steuereinrichtung 16 zum Überwachen des Kurbelgehäusedrucks. Die Steuereinrichtung 16 enthält einen Funktionsblock Stationärerkennung 60 zum Erkennen eines stationären Betriebs des Dieselmotors 10. Im vorliegenden Ausführungsbeispiel bedeutet stationärer Betrieb, dass der Dieselmotor 10 länger als eine vorgegebene Mindestzeitdauer in den Grenzen eines Betriebsbereichs des Dieselmotors 10 betrieben wird. Die Mindestzeitdauer beträgt im vorliegenden Ausführungsbeispiel 5 Minuten. Das bedeutet, der stationäre Betrieb des Dieselmotors 10 wird dann festgestellt, wenn dieser 5 Minuten oder länger in einem seiner Betriebsbereiche betrieben wird. Der Begriff Betriebsbereich bezieht sich vorteilhafterweise auf einen der Kennlinienbereiche inklusive der diesem zugeordneten Hysteresebereiche des Kennlinienfelds 30. Zum Bestimmen des Betriebsbereichs wird dem Funktionsblock 60 an einer Eingangsschnittstelle 62 eine Angabe über das aktuell vom Dieselmotor 10 gelieferte Drehmoment M und an einer weiteren Eingangsschnittstelle 64 eine Angabe über die aktuelle Drehzahl n des Dieselmotors 10 übermittelt. Mittels dieser beiden Angaben sind in dem Kennlinienfeld 30 der aktuelle Betriebspunkt und damit der aktuelle Betriebsbereich festgelegt, in dem sich der Betriebspunkt befindet. Bei einem Eintritt des Dieselmotors 10 in den Betriebsbereich wird in dem Funktionsblock 60 ein Erfassen der Zeit gestartet. Diese Zeit wird überwacht und läuft so lange weiter, wie der Dieselmotor 10 in dem Betriebsbereich betrieben wird. Sofern festgestellt wird, dass die erfasste Zeit die vorgegebene Mindestzeitdauer überschreitet, so wird der stationäre Betrieb des Dieselmotors 10 erkannt. Verlässt der Dieselmotor 10 im Betrieb den Betriebsbereich bevor die Mindestzeitdauer erreicht ist, so wird kein stationärer Betrieb erkannt. Das Erfassen der Zeit zum Erkennen des stationären Betriebs wird erneut für denjenigen Betriebsbereich gestartet, in den der Dieselmotor 10 nun eingetreten ist und in dem er nun betrieben wird.

Im Folgenden wird ein Beispiel für die konkrete Funktionsweise des Funktionsblocks 60 beschrieben. Der Dieselmotor 10 tritt in einen neuen Betriebsbereich ein und das Erfassen der Zeit, während der er in diesem neuen Betriebsbereich betrieben wird, wird gestartet. Dem Funktionsblock 60 werden ein aktuelles Drehmoment von 1300 Nm bei einer aktuellen Drehzahl von 1050 U/min übermittelt. Der Betriebspunkt, bei dem der Dieselmotor 10 aktuell betrieben wird, befindet sich somit in dem Kennlinienbereich 48 des Kennlinienfeldes 30 nach Fig. 2. Der Kennlinienbereich 48 bildet zusammen mit den Hysteresebereichen 52 und 54 denjenigen Betriebsbereich, in dem der Dieselmotor 10 aktuell betrieben wird. Die Betriebspunkte, bei denen der Dieselmotor 10 betrieben wird, verändern sich während des weiteren Betriebs. Allerdings liegen diese Betriebspunkte zunächst weiterhin in dem Kennlinienbereich 48. Nach 5 Minuten in dem Kennlinienbereich 48 wird der stationäre Betrieb des Dieselmotors 10 erkannt. Dies bewirkt, dass das Überwachen des Kurbelgehäusedrucks gestartet wird. Während des weiteren Betriebs des Dieselmotors 10 verlässt dieser an seiner oberen Drehzahlgrenze den Kennlinienbereich 48 und tritt in den Hysteresebereich 54 ein. Dieses Eintreten in den Hysteresebereich 54 wird von dem Funktionsblock 60 allerdings nicht als ein Verlassen des Betriebsbereichs gewertet. Der Dieselmotor 10 verlässt den aktuellen Betriebsbereich erst dann, wenn er bei einer weiteren Steigerung seiner Drehzahl auch den Hysteresebereich 54 verlässt. In diesem Fall wird dann von dem Funktionsblock 60 erkannt, dass kein stationärer Betrieb des Dieselmotors 10 mehr vorliegt. Daraus folgt, dass das erfindungsgemäße Überwachen des Kurbelgehäusedrucks beendet wird. Gleichzeitig wird ein erneutes Erfassen der Zeit für ein erneutes Erkennen des stationären Betriebs des Dieselmotors 10 gestartet. Nimmt im weiteren Betrieb die Drehzahl des Dieselmotors 10 wieder ab, so dass der aktuelle Betriebspunkt in den Hysteresebereich 54 zurückkehrt, dann wertet der Funktionsblock 60 dies nicht als erneutes Verlassen des aktuellen Betriebsbereichs. Das Erfassen der Zeit zum Erkennen des stationären Betriebs wird daher fortgesetzt. Wenn im weiteren Betrieb der aktuelle Betriebspunkt des Dieselmotors 10 bei abnehmender Drehzahl erneut in den Kennlinienbereich 48 zurückfällt, wertet der Funktionsblock 60 dies als Verlassen des aktuellen Betriebsbereichs und startet erneut das Erfassen der Zeit. Dadurch kann vorteilhafterweise vermieden werden, dass ein geringfügiges Hin- und Herspringen des Betriebs des Dieselmotors 10 zwischen zwei benachbarten Kennlinienbereichen bei Überschreiten der Grenze zwischen den beiden Kennlinienbereichen jedes Mal zu einem erneuten Beginnen des Erkennens des stationären Betriebs führt.

An einer weiteren Eingangsschnittstelle 66 des Funktionsblocks 60 wird im vorliegenden Ausführungsbeispiel eine Angabe über die Hysteresebereiche, insbesondere über ihre Größe, übermittelt. Vorteilhafterweise ist es somit möglich, die Hysteresebereiche, insbesondere ihre Größe, an eine bestimmte Anwendung oder Anforderung anzupassen.

Wird durch den Funktionsblock 60 erkannt, dass ein stationärer Betrieb des Dieselmotors 10 vorliegt, so wird die Überwachung des Kurbelgehäusedrucks über einen Schalterblock 68 aktiviert, dem ein Signal mit einer Angabe über den erkannten stationären Betrieb von dem Funktionsblock 60 zugeleitet wird. Der Schalterblock 68 ist dazu mit einer Ausgangsschnittstelle 70 verbunden. Die Ausgangsschnittstelle 70 kann in Abhängigkeit von einem Eingangssignal von dem Schalterblock 68 aktiviert und deaktiviert werden.

Zum Überwachen des Kurbelgehäusedrucks weist die Steuereinrichtung einen Filterblock 72 auf. Der Filterblock 72 enthält ein sogenanntes PT₁-Glied mit einer Tiefpasscharakteristik. Eine Angabe mit einer Zeitkonstante des PT₁-Glieds kann dem Filterblock 72 an einer Eingangsschnittstelle 74 zugeführt werden. Die Charakteristik des PT₁-Glieds ist somit einstellbar. Die Zeitkonstante ist kürzer, als die vorgegebene Mindestzeitdauer zum Erkennen des stationären Betriebs des Dieselmotors 10. An einer weiteren Eingangsschnittstelle 76 wird dem Filterblock 72 eine Angabe über den von dem Sensor 14 ermittelten aktuellen Kurbelgehäusedruck zugeführt. Diese Angabe über den aktuellen Kurbelgehäusedruck wird mittels des Filterblocks 72 gefiltert, so dass an einem Ausgang 78 des Filterblocks 72 eine Angabe über einen gefilterten Kurbelgehäusedruck vorliegt.

Diese Angabe über den gefilterten Kurbelgehäusedruck wird einem Vergleicher 80 zugeführt. Ein Eingang 82 des Vergleichers 80 ist dazu mit dem Ausgang 78 verbunden. Ein weiterer Eingang 84 des Vergleichers 80 ist mit einem Addierer 86 verbunden. Der Addierer 86 führt dem Vergleicher 80 eine Angabe über einen Vergleichsdruck zu, den der Vergleicher 80 mit dem gefilterten Kurbelgehäusedruck vergleicht. Ist der gefilterte Kurbelgehäusedruck größer als der Vergleichsdruck, so liegt ein überhöhter Kurbelgehäusedruck und damit ein Fehler vor. Dieser Fehler wird der Ausgangsschnittstelle 70 übermittelt, die dazu mit einem Ausgang des Vergleichers 80 verbunden ist. In aktiviertem Zustand wird von der Ausgangsschnittstelle 70 bei fehlerhaftem Kurbelgehäusedruck ein Signal zum optischen und/oder akustischen Anzeigen des Fehlers oder ein Signal zum Abstellen des Dieselmotors 10 ausgegeben. Die Art des von der Ausgangsschnittstelle ausgegebenen Signals kann vorteilhafterweise von der Größe des aufgetretenen Fehlers abhängig sein.

Der Addierer 86 erzeugt die Angabe über den Vergleichsdruck mittels einer Addition eines Offset-Werts und eines Drucksollwerts. Der Drucksollwert wird dem Addierer 86 von einem Speicher 88 zugeführt, der dazu mit einem Eingang 90 des Addierers 86 verbunden ist. In dem Speicher 88 ist das Kennlinienfeld 30 mit den Drucksollwerten abgespeichert, die den verschiedenen Stützstellen zugeordnet sind. Der Drucksollwert, der dem Addierer 86 zugeführt wird, hängt von dem Kennlinienbereich ab, in dem sich der Betriebspunkt befindet, in dem der Dieselmotor 10 aktuell betrieben wird. Dieser Betriebspunkt ist dem Funktionsblock 60 bekannt, so dass von dem Funktionsblock 60 eine geeignete Information zum Bestimmen des dem Betriebspunkt zugeordneten Kennlinienbereichs an den Speicher 88 übermittelt werden kann. Der Funktionsblock 60 ist dazu mit dem Speicher 88 verbunden. Der Drucksollwert, der dem Addierer 86 zugeführt wird, hängt von dem Kennlinienbereich ab, in dem sich der Betriebspunkt befindet, in dem der Dieselmotor 10 aktuell betrieben wird. Im vorliegenden Ausführungsbeispiel wird als Drucksollwert ein Drucksollwert ausgewählt, der der örtlichen Mitte des Kennlinienbereichs zugeordnet ist, in dem sich der Betriebspunkt befindet. Dieser Drucksollwert bestimmt sich aus denjenigen Drucksollwerten, die den Stützstellen des Kennlinienbereichs zugeordnet sind.

Der Offset-Wert wird dem Addierer 86 von einem Offset-Block 92 zugeführt, der dazu mit einem Eingang 94 des Addierers 86 verbunden ist. Im vorliegenden Ausführungsbeispiel ist die Höhe des Offset-Werts abhängig von dem Kennlinienbereich, in dem sich der Betriebspunkt befindet, in dem der Dieselmotor 10 aktuell betrieben wird. Dem Offset-Block 92 wird dazu an einem Eingang 96 eine Angabe über den Kennlinienbereich übermittelt. Abhängig davon bestimmt der Offset-Block 92 den Offset-Wert, der an den Addierer 86 übermittelt wird. Der Offset-Wert ist einstell- und veränderbar und kann somit an bestimmte Anwendungen und Anforderungen angepasst werden.

Erfindungsgemäß können die Drucksollwerte, die den Stützstellen des Kennlinienfeldes 30 zugeordnet sind, verändert werden. Dies erfolgt dann, wenn der stationäre Betrieb des Dieselmotors 10 erkannt wurde. Dieses Verändern erfolgt in Abhängigkeit von dem gefilterten Kurbelgehäusedruck, der am Ausgang 78 des Filterblocks 72 ausgegeben wird. Der gefilterte Kurbelgehäusedruck wird an einen Subtrahierer 98 übertragen. Dazu ist der Filterblock 72 mit dem Subtrahierer 98 verbunden. Dem Subtrahierer 98 wird ferner ein weiterer Drucksollwert zugeführt, der dem Kennlinienfeld 30 entnommen wird. Der Speicher 88 ist zum Übermitteln dieses weiteren Drucksollwerts mit dem Subtrahierer 98 verbunden. Der weitere Drucksollwert wird in Abhängigkeit von verschiedenen Betriebspunkten des Kennlinienbereichs des Kennlinienfeldes 30 bestimmt, in dem der Dieselmotor 10 seit dem letzten Beginn der Zeitmessung zum Erkennen des stationären Betriebs betrieben wird. Die Drehmomente und Drehzahlen dieser verschiedenen Betriebspunkte werden gemittelt und aus dem so bestimmten gemittelten Drehmoment und der gemittelten Drehzahl derjenige Betriebspunkt des Kennlinienbereichs ermittelt, dem der weitere Drucksollwert zugeordnet ist. Der weitere Drucksollwert wird in Abhängigkeit von den Drucksollwerten ermittelt, die den Stützstellen des Kennlinienbereichs zugeordnet sind.

Mittels des Subtrahierers 98 wird eine Abweichung des gefilterten Kurbelgehäusedrucks von dem weiteren Drucksollwert ermittelt. Diese Abweichung wird mittels eines Multiplizierers 100 mit einem Faktor multipliziert, der dem Multiplizierer 100 an einem Eingang 102 zugeführt wird. Der Faktor ist im vorliegenden Ausführungsbeispiel kleiner als eins und größer als null. Am Ausgang des Multiplizierers 100 liegt ein Korrekturwert vor, mit dem einer oder mehrere der Drucksollwerte des Kennlinienfeldes 30 korrigiert werden können. Im vorliegenden Ausführungsbeispiel werden die Drucksollwerte korrigiert, die den Stützstellen des Kennlinienfeldes zugeordnet sind, in dem sich der aktuelle Arbeitspunkt des Dieselmotors 10 befindet. Die Korrektur dieser Drucksollwerte hängt vom Abstand des jeweiligen Stützpunkts von dem Betriebspunkt ab. Je größer der Abstand desto geringer ist die Korrektur, und je kleiner der Abstand desto größer ist die Korrektur. Die korrigierten Drucksollwerte werden in dem Speicher 88 abgespeichert und ersetzen die entsprechenden Drucksollwerte der Stützstellen des Kennlinienbereichs.

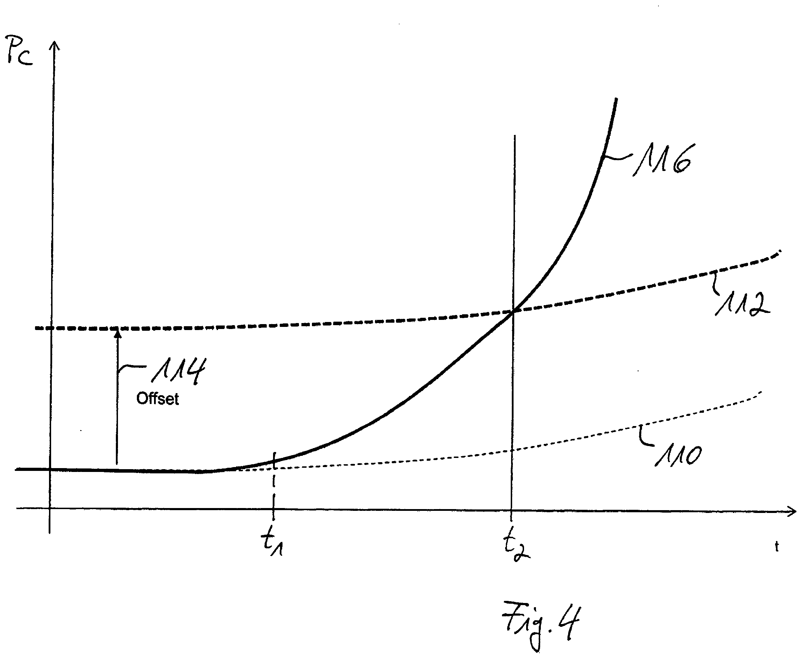

**Fig. 4** zeigt eine schematische Darstellung eines Beispiels eines zeitlichen Verlaufs einer Veränderung eines Drucksollwerts und eines aktuellen Kurbelgehäusedrucks für einen Betriebspunkt eines Bereichs des Kennlinienfelds nach Fig. 2. Aufgetragen ist ein Kurbelgehäusedruck p_{C} über der Zeit t. In dem Diagramm ist eine Kurve 110 dargestellt, die den zeitlichen Verlauf einer Veränderung des Drucksollwerts darstellt. Es ist ferner eine Kurve 112 dargestellt, die einen zeitlichen Verlauf einer Veränderung eines Vergleichsdrucks darstellt. Der Vergleichsdruck ergibt sich aus der Addition des Drucksollwerts mit einem Offset-Wert 114. Dargestellt ist ferner eine Kurve 116 mit einem zeitlichen Verlauf des aktuellen Kurbelgehäusedrucks. Der zeitliche Verlauf des aktuellen Kurbelgehäusedrucks verläuft in etwa ab einem Zeitpunkt t₁ schnell und steil, so dass von einem Fehlerfall ausgegangen werden muss. Aufgrund der Veränderung des aktuellen Kurbelgehäusedrucks wird erfindungsgemäß ebenfalls der Drucksollwert verändert und an die Veränderung des aktuellen Kurbelgehäusedrucks angepasst. Aufgrund der Gewichtung der Abweichung des aktuellen Kurbelgehäusedrucks, insbesondere des gefilterten aktuellen Kurbelgehäusedrucks, mit dem Faktor mittels des Multiplizierers 100 (Fig. 3) erfolgt das Verändern des Drucksollwerts allerdings wesentlich langsamer und wesentlich weniger steil. Zu einem Zeitpunkt t₂ schneidet die Kurve 116 die Kurve 112. Es wird somit ein Fehler festgestellt, der geeignete Maßnahmen nach sich ziehen kann, um eine Beschädigung des Dieselmotors 10 zu vermeiden. Die in der Fig. 4 nach dem Zeitpunkt t₂ dargestellten Verläufe der Kurven 110, 112 und 116 sind mögliche Verläufe, die dann eintreten, wenn nach dem Erkennen des Fehlers keine geeigneten Maßnahmen erfolgen sollten.

## Patentansprüche

1. Verfahren zum Überwachen eines Kurbelgehäusedrucks in einem Kurbelgehäuse (12) einer Verbrennungskraftmaschine (10), bei dem für mehrere Betriebspunkte (32-46) der Verbrennungskraftmaschine (10) Drucksollwerte für den Kurbelgehäusedruck festgelegt werden, **dadurch gekennzeichnet, dass** wenigstens einer der festgelegten Drucksollwerte während des Betriebs der Verbrennungskraftmaschine (10) verändert wird.

2. Verfahren nach Anspruch 1, **dadurch gekennzeichnet, dass** der wenigstens eine der festgelegten Drucksollwerte in Abhängigkeit von einer Druckinformation über einen aktuell vorhandenen Kurbelgehäusedruck verändert wird.

3. Verfahren nach Anspruch 1 oder 2, **dadurch gekennzeichnet, dass** die Druckinformation mittels eines Filters (72) gefiltert und der wenigstens eine der festgelegten Drucksollwerte in Abhängigkeit von der gefilterten Druckinformation verändert wird.

4. Verfahren nach Anspruch 3, **dadurch gekennzeichnet, dass** der Filter (72), mit dem die Druckinformation gefiltert wird, eine zeitliche Mittelung bewirkt, die durch eine Filter-Zeitkonstante als Filterparameter charakterisiert ist.

5. Verfahren nach einem der vorhergehenden Ansprüche, **dadurch gekennzeichnet, dass** der wenigstens eine der festgelegten Drucksollwerte in Abhängigkeit von einem Erkennen eines stationären Betriebs der Verbrennungskraftmaschine (10) verändert wird, bei dem die Verbrennungskraftmaschine (10) über wenigstens eine vorgegebene Zeitdauer in den Grenzen eines Betriebsbereichs (48, 50) der Verbrennungskraftmaschine (10) betrieben wird.

6. Verfahren nach Anspruch 5, **dadurch gekennzeichnet, dass** an einer Grenze des Betriebsbereichs (48, 50) ein Hysteresebereich (52, 54) zum Erkennen des stationären Betriebs der Verbrennungskraftmaschine (10) vorhanden ist.

7. Verfahren nach Anspruch 4 und einem der Ansprüche 5 oder 6, **dadurch gekennzeichnet, dass** die Filter-Zeitkonstante kürzer ist, als die vorgegebene Zeitdauer zum Erkennen des stationären Betriebs der Verbrennungskraftmaschine (10).

8. Verfahren nach einem der vorhergehenden Ansprüche, **dadurch gekennzeichnet, dass** ein Fehler beim Betreiben der Verbrennungskraftmaschine (10) in Abhängigkeit von einer Druckinformation über einen aktuellen Kurbelgehäusedruck und der Summe aus einem vorgegebenen Offset-Wert und dem Drucksollwert für den Kurbelgehäusedruck, der einem vorgegebenen Betriebspunkt eines Betriebsbereichs (48, 50) zugeordnet ist, in dem die Verbrennungskraftmaschine (10) betrieben wird, festgestellt wird.

9. Verfahren nach einem der vorhergehenden Ansprüche, **dadurch gekennzeichnet, dass** eine Abweichung des wenigstens einen der festgelegten Drucksollwerte von einer Druckinformation über einen aktuellen Kurbelgehäusedruck bestimmt und der wenigstens eine der festgelegten Drucksollwerte in Abhängigkeit von einer Multiplikation dieser Abweichung mit einem Faktor verändert wird, wobei der Faktor kleiner als eins und größer als null ist.

10. Steuervorrichtung (16) zum Überwachen eines Kurbelgehäusedrucks in einem Kurbelgehäuse (12) einer Verbrennungskraftmaschine (10), wobei die Steuervorrichtung (16) so ausgestaltet ist, dass sie für mehrere Betriebspunkte (32-46) der Verbrennungskraftmaschine (10) Drucksollwerte für den Kurbelgehäusedruck festlegt, **dadurch gekennzeichnet, dass** wenigstens einen der festgelegten Drucksollwerte während des Betriebs der Verbrennungskraftmaschine (10) verändert.

## Claims

1. Method for monitoring a crankcase pressure in a crankcase (12) of an internal combustion engine (10), in which setpoint pressure values for the crankcase pressure are defined for a plurality of operating points (32-46) of the internal combustion engine (10), **characterized in that** at least one of the defined setpoint pressure values is changed during the operation of the internal combustion engine (10).

2. Method according to Claim 1, **characterized in that** the at least one of the defined setpoint pressure values is changed as a function of pressure information about a currently present crankcase pressure.

3. Method according to Claim 1 or 2, **characterized in that** the pressure information is filtered by means of a filter (72), and the at least one of the defined setpoint pressure values is changed as a function of the filtered pressure information.

4. Method according to Claim 3, **characterized in that** the filter (72) with which the pressure information is filtered brings about averaging over time which is **characterized by** a filter time constant as a filter parameter.

5. Method according to one of the preceding claims, **characterized in that** the at least one of the defined setpoint pressure values is changed as a function of detection of steady-state operation of the internal combustion engine (10), during which the internal combustion engine (10) is operated within the limits of an operating range (48, 50) of the internal combustion engine (10) over at least one predefined time period.

6. Method according to Claim 5, **characterized in that** a hysteresis range (52, 54) for the detection of the steady-state operation of the internal combustion engine (10) is present at a limit of the operating range (48, 50).

7. Method according to Claim 4 and one of Claims 5 or 6, **characterized in that** the filter time constant is shorter than the predefined time period for the detection of the steady-state operation of the internal combustion engine (10).

8. Method according to one of the preceding claims, **characterized in that** a fault during the operation of the internal combustion engine (10) is detected as a function of pressure information about a current crankcase pressure and the sum of a predefined offset value and the setpoint pressure value for the crankcase pressure which is assigned to a predefined operating point of an operating range (48, 50) in which the internal combustion engine (10) is operated.

9. Method according to one of the preceding claims, **characterized in that** a deviation of the at least one of the defined setpoint pressure values from pressure information about a current crankcase pressure is determined and the at least one of the defined setpoint pressure values is changed as a function of a multiplication of this deviation by a factor, when the factor is less than one and greater than zero.

10. Control apparatus (16) for monitoring a crankcase pressure in a crankcase (12) of an internal combustion engine (10), wherein the control apparatus (16) is configured in such a way that it defines setpoint pressure values for the crankcase pressure for a plurality of operating points (32-46) of the internal combustion engine (10), **characterized in that** at least one of the defined setpoint pressure values changes during the operation of the internal combustion engine (10) .

## Revendications

1. Procédé pour la surveillance d'une pression de carter de vilebrequin dans un carter de vilebrequin (12) d'u moteur à combustion interne (10), dans lequel des valeurs de pression de consigne sont définies pour la pression de carter de vilebrequin en plusieurs points de fonctionnement (32-46) du moteur à combustion interne (10), **caractérisé en ce qu'**au moins l'une des valeurs de pression de consigne définies est modifiée pendant le fonctionnement du moteur à combustion interne (10).

2. Procédé selon la revendication 1, **caractérisé en ce que** ladite au moins une des valeurs de pression de consigne définies est modifiée en fonction d'une information de pression concernant une pression de carter de vilebrequin actuellement présente.

3. Procédé selon la revendication 1 ou 2, **caractérisé en ce que** l'information de pression est filtrée au moyen d'un filtre (72) et **en ce que** ladite au moins une des valeurs de pression de consigne définies est modifiée en fonction de l'information de pression filtrée.

4. Procédé selon la revendication 3, **caractérisé en ce que** le filtre (72) au moyen duquel l'information de pression est filtrée provoque un moyennage temporel qui est **caractérisé par** une constante de temps de filtre en tant que paramètre de filtre.

5. Procédé selon l'une quelconque des revendications précédentes, **caractérisé en ce que** ladite au moins une des valeurs de pression de consigne définies est modifiée en fonction d'une détection d'un fonctionnement stationnaire du moteur à combustion interne (10) pour lequel le moteur à combustion interne (10) est mis en fonctionnement pendant au moins une période de temps prédéterminée dans les limites d'une plage de fonctionnement (48, 50) du moteur à combustion interne (10).

6. Procédé selon la revendication 5, **caractérisé en ce qu'**une plage d'hystérésis (52, 54) permettant de détecter le fonctionnement stationnaire du moteur à combustion interne (10) est présente au niveau d'une limite de la plage de fonctionnement (48, 50).

7. Procédé selon la revendication 4 et l'une des revendications 5 ou 6, **caractérisé en ce que** la constante de temps du filtre est inférieure à la période de temps prédéterminée permettant de détecter le fonctionnement stationnaire du moteur à combustion interne (10).

8. Procédé selon la revendication 4 et l'une des revendications précédentes, **caractérisé en ce qu'**une erreur se produisant lors du fonctionnement du moteur à combustion interne (10) est établie en fonction d'une information de pression concernant une pression de carter de vilebrequin actuelle et de la somme d'une valeur de décalage prédéterminée et de la valeur de pression nominale pour la pression de carter de vilebrequin qui est associée à un point de fonctionnement prédéterminé d'une plage de fonctionnement (48, 50) dans laquelle le moteur à combustion interne (10) est mis en fonctionnement.

9. Procédé selon l'une quelconque des revendications précédentes, **caractérisé en ce qu'**un écart entre ladite au moins une des valeurs de pression de consigne définies et une information de pression concernant une pression de carter de vilebrequin actuelle est déterminé et **en ce que** ladite au moins une des valeurs de pression de consigne définies est modifiée en fonction d'une multiplication dudit écart par un facteur, dans lequel ledit facteur est inférieur à un et supérieur à zéro.

10. Dispositif de commande (16) destiné à surveiller une pression de carter de vilebrequin dans un carter de vilebrequin (12) d'un moteur à combustion interne (10), dans lequel le dispositif de commande (16) est conçu de manière à définir des valeurs de pression de consigne pour la pression de carter de vilebrequin en plusieurs points de fonctionnement (32-46) du moteur à combustion interne (10), **caractérisé en ce qu'**au moins l'une des valeurs de pression de consigne définies est modifiée pendant le fonctionnement du moteur à combustion interne (10).
